# EUROPÄISCHE PATENTSCHRIFT

(11) **EP 0 472 877 B1**
(45) Veröffentlichungstag und Bekanntmachung des Hinweises auf die Patenterteilung: **22.02.1995**
(21) Anmeldenummer: 91111828.9
(22) Anmeldetag: 16.07.1991
(51) Int. Cl.: G01P 3/481, G01P 21/02

(54) **Vorrichtung zur Drehzahlermittlung einer Brennkraftmaschine**
Apparatus to determine the rotational speed of an internal combustion engine
Dispositif pour déterminer la vitesse angulaire d'un moteur à combustion interne

(30) Priorität: 09.08.1990 DE 4025218
(43) Veröffentlichungstag der Anmeldung: 04.03.1992
(73) Patentinhaber: ROBERT BOSCH GMBH, 70442 Stuttgart (DE)
(72) Erfinder: Anlauf, Jürgen, Dipl.-Ing., W-7320 Göppingen (DE)

(56) Entgegenhaltungen:
- EP-A- 0 315 357
- DE-A- 2 648 382
- DE-A- 3 027 051
- DE-A- 3 644 189

## Beschreibung

### Stand der Technik

Die Erfindung geht aus von einer Vorrichtung zur Drehzahlermittlung einer Brennkraftmaschine nach der Gattung des Anspruchs 1. Aus der DE-OS 30 27 051 ist ein Prüfverfahren für ein in einem Kraftfahrzeug angeordnetes elektronisches Tachometer bekannt. Das vorbekannte Prüfverfahren greift auf ein im Kraftfahrzeug vorhandenes Signal zurück, das eine bekannte Frequenz aufweist. Ein erstes Prüfsignal entspricht einer Zünd-Impulsfolge einer fremdgezündeten Brennkraftmaschine, das beispielsweise an einer Zündspule abgegriffen wird. Ein anderes Prüfsignal ist von einer Phase eines Drehstromgenerators bereitgestellt.

Aus der DE-A 36 44 189 ist eine Vorrichtung zur Ermittlung eines Schlupfs zwischen rotierenden Teilen bekannt. Die vorbekannte Vorrichtung sieht den Einsatz von zwei Drehzahlsensoren vor. Ein erster Drehzahlsensor ist vor und ein zweiter Drehzahlsensor nach einem Kupplungsteil angeordnet, bei dem ein Schlupf auftreten kann. Aus der Drehzahldifferenz kann ein Maß für den Schlupf abgeleitet werden. Eine beschriebene signalverarbeitende Anordnung nimmt die Signalverarbeitung der von den beiden Drehzahlsensoren abgegebenen Signalen in der Weise vor, daß eine Division der Signale nicht erforderlich ist.

Aus der EP-A 0 315 357 ist ein Tachometer bekannt, das beispielsweise zum Erfassen einer Drehzahl einer fremdgezündeten Brennkraftmaschine vorgesehen ist. Ausgewertet werden die auf einem elektrischen Bordnetz des Kraftfahrzeugs auftretenden Störimpulse, die von den Zündimpulsen der fremdgezündeten Brennkraftmaschine verursacht sind. Die beschriebene signalverarbeitende Anordnung enthält mehrere Signalfilterschaltungen, welche eine selektive Aufbereitung der auszuwertenden Signalanteile bewerkstelligen. Die signalverarbeitende Anordnung stellt am Ausgang ein Signal bereit, das ein Maß für die Drehzahl der Brennkraftmaschine ist.

Der Erfindung liegt die Aufgabe zugrunde, eine einfache Vorrichtung zur hochaufgelösten Ermittlung der Drehzahl einer fremdgezündeten Brennkraftmaschine anzugeben.

Die Aufgabe wird durch die im Anspruch 1 angegebenen Merkmale gelöst.

### Vorteile der Erfindung

Die erfindungsgemäße Vorrichtung weist zunächst den Vorteil einer leichten Adaption auf, wobei lediglich ein Anschluß an einem elektrischen Schaltungsteil eines Bordnetzes eines Kraftfahrzeugs benötigt wird. Die Erfindung beruht darauf, daß in die elektrischen Schaltungsteile des Bordnetzes den Zündimpulsen entsprechende Signalanteile eingekoppelt werden. Die von der elektrischen Zündanlage der Brennkraftmaschine erzeugten Zündimpulse enthalten hochfrequente Signalanteile, die zu einer elektromagnetischen Signalabstrahlung führen, die von den Schaltungsteilen empfangen wird. Ferner ist eine kapazitive sowie induktive Signalkopplung gegeben. Die kapazitive Kopplung entsteht durch die räumliche Zuordnung zwischen der Brennkraftmaschine mit der elektrischen Zündanlage zu den elektrischen Schaltungsteilen, wobei vergleichsweise hohen Spannungen trotz kleiner Kopplungskapazitiven zu ausreichend hohen Verschiebungsströmen führen. Die induktive Kopplung erfolgt im wesentlichen über das Magnetfeld, das durch die vergleichsweise hohen Impulsströme, insbesondere im Sekundärkreis der Zündung entstehen. Sofern die Schaltungsteile mit der Zündunganlage elektrisch verbunden sind, tritt darüberhinaus eine galvanische Kopplung über die Primärseite der Zündanlage auf.

Die vorgesehene signalverarbeitende Anordnung enthält eine Eingabeeinheit, über die die Anzahl der Zündimpulse pro Umdrehung der Brennkraftmaschine eingebbar ist. Die signalverarbeitende Anordnung ist weiterhin derart ausgebildet, daß sie im Betrieb die Generatorfrequenz der von einem Drehstromgenerator auf dem Bordnetz verursachten Restwelligkeit ermittelt. Aus der ermittelten Generatorfrequenz, den den Zündimpulsen entsprechenden Signalanteilen sowie der bekannten Anzahl von Zündimpulsen pro Umdrehung der Brennkraftmaschine ermittelt die signalverarbeitende Anordnung das Übersetzungsverhältnis zwischen der Generatorfrequenz und der Drehzahl der Brennkraftmaschine. Aus dem übersetzungsverhältnis und der Generatorfrequenz wird ein hochaufgelöstes, die Drehzahl der Brennkraftmaschine repräsentierendes Drehzahlsignal gewonnen.

Vorteilhafte Weiterbildungen und Ausgestaltungen der erfindungsgemäßen Vorrichtung ergeben sich aus abhängigen Ansprüchen.

Die signalverarbeitende Anordnung enthält vorteilhafterweise eine Bandpaßfilterung für das an den elektrischen Schaltungsteilen abgegriffene Signal zum Herausfiltern der Nutzsignalanteile. Eine Vereinfachung ist durch den Einsatz einer einfacheren Hochpaßfilterung möglich.

Eine vorteilhafte Weiterbildung sieht vor, daß das Übersetzungsverhältnis zur Beurteilung der mechanischen Kopplung zwischen Brennkraftmaschine und Generator herangezogen werden kann.

Das von der signalverarbeitenden Anordnung bereitgestellte, die Drehzahl der Brennkraftmaschine repräsentierende Signal weist den Vorteil einer hohen Winkelauflösung auf, da die Generatorfrequenz wesentlich höher ist als die Zündfrequenz. Dieser Vorteil tritt besonders in Verbindung mit anderen Diagnoseeinrichtungen und -verfahren auf. Möglich ist ein genauer Bezug zwischen momentanem Arbeitstakt jedes einzelnen Zylinders und der Momentandrehzahl, wie er beispielsweise für eine zylinderbezogene Laufunruhemessung erforderlich ist.

Weitere vorteilhafte Weiterbildungen und Verbesserungen der erfindungsgemäßen Vorrichtung ergeben sich aus weiteren abhängigen Ansprüchen und aus der folgenden Beschreibung.

### Zeichnung

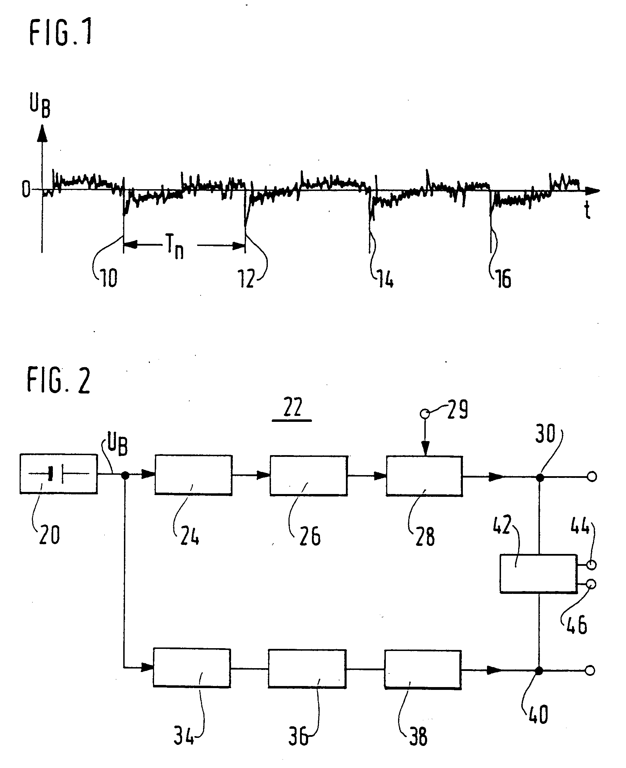

Figur 1 zeigt einen Signalverlauf, der an elektrischen Schaltungsteilen abgreifbar ist, die zu einer fremdgezündeten Brennkraftmaschine benachbart angeordnet sind, und Figur 2 zeigt ein Blockschaltbild einer signalverarbeitenden Anordnung zu Ermittlung der Drehzahl der Brennkraftmaschine.

Figur 1 zeigt einen Signalverlauf U_{B}, der an nicht näher gezeigten elektrischen Schaltungsteilen abgreifbar ist, die benachbart zu einer ebenfalls nicht dargestellten fremdgezündeten Brennkraftmaschine angeordnet sind. Das Signal U_{B} ist beispielsweise die Bordspannung eines Kraftfahrzeugs. In diesem Fall ist nur der Wechselspannungsanteil unter Weglassung des erheblich höheren Gleichspannungsanteils gezeigt. Das Signal U_{B} enthält impulsförmige Signalanteile 10, 12, 14, 16, die den Zündimpulsen der Brennkraftmaschine entsprechen. Die Impulse 10, 12, 14, 16 entstehen durch elektromagnetische, induktive, kapazitive und gegebenenfalls galvanische Kopplung zwischen der elektrischen Zündanlage der Brennkraftmaschine und den zur Brennkraftmaschine benachbart angeordneten elektrischen Schaltungsteilen.

Die in das Signal U_{B} eingekoppelten Impulse 10, 12, 14, 16 werden allgemein als Störsignale betrachtet, die dem Signal U_{B} in unerwünschter Weise überlagert werden. Die erfindungsgemäße Vorrichtung sieht die dem Signal U_{B} überlagerten Impulse 10, 12, 14, 16 als Nutzsignale an und wertet die zwischen den Impulsen 10, 12; 12, 14; 14, 16 liegende Zeiten Tₙ aus und ermittelt deraus die Drehzahl.

Ein Blockschaltbild der signalverarbeitenden Anordnung ist in Figur 2 gezeigt. Als Beispiel der elektrischen Schaltungsteile ist in Figur 2 das Bordnetz 20 eines Kraftfahrzeugs gezeigt, das mit einem Batteriesymbol eingetragen ist. Das an den Schaltungsteilen 20 abgreifbare Signal U_{B} wird einer signalverarbeitenden Anordnung 22 zugeleitet, die eine Signalfilterung 24, eine Impulsformung 26 sowie eine Signalauswertung 28 enthält. Die Auswertung 28 bestimmt in Abhängigkeit von einer Eingabe 29 die Drehzahl der Brennkraftmaschine, die an einem Ausgang 30 der Anordnung 22 auftritt.

Die Signalfilterung 24 enthält beispielsweise einen Bandpaßfilter, dessen Durchlaßbereich auf den Frequenzbereich der Impulse 10, 12, 14, 16 abgestimmt ist. Da die Frequenz dieser Impulse gegenüber den anderen Signalanteilen des Signals U_{B} im allgemeinen vergleichsweise hochfrequent ist, kann anstelle des Bandpaßfilters ein Hochpaßfilter ausreichend sein. Sofern die Impulse 10, 12, 14, 16 einen höheren Signalpegel aufweisen als das verbleibende Signal U_{B}, kann die Signalfilterung 24 ersetzt sein durch einen Komparator. Die Signalfilterung 24 trennt die Impulse 10, 12, 14, 16 von den übrigen Anteilen des Signals U_{B} und leitet sie der Impulsformung 26 zu. Die Impulsformung 26 stellt geeignete Signale zur Verfügung, die in der Signalauswertung 28 weiterverarbeitet werden zur Ermittlung der Drehzahl der Brennkraftmaschine. Die Signalauswertung 28 ermittelt in Abhängigkeit von den erfaßten Zeiten Tₙ mit Kenntnis der Anzahl der Zündimpulse 10, 12, 14, 16 pro Umdrehung über die Eingabe 29 der Brennkraftmaschine, deren Drehzahl, die am Ausgang 30 abnehmbar ist. Die Anzahl der Zündimpulse 10, 12, 14, 16 pro Umdrehung ist über die Eingabe 29 geeignet vorgebbar, die gegebenenfalls vorhanden ist.

Die signalverarbeitende Anordnung 22 enthält ferner eine weitere Signalfilterung 34, eine weitere Impulsformung 36 sowie eine weitere Signalauswertung 38. Das Signal U_{B} wird auch der weiteren Signalfilterung 34 zugeführt. Die Signalfilterung 34 enthält beispielsweise einen Bandpaßfilter, der so abgestimmt ist, daß er nur die Restwelligkeit eines Generatorsignals durchläßt, das dem Signal U_{B} überlagert ist, sofern die Schaltungsmittel 20 einen von der Brennkraftmaschine angetriebenen Drehstromgenerator enthalten.. Die Impulsformung 36 stellt geeignete Signale zur Verfügung, die in der Signalauswertung 38 weiterverarbeitet werden zur Ermittlung der Drehzahl der Brennkraftmaschine an einem Ausgang 40, die bis auf einen zunächst unbekannten Faktor bestimmt ist, der das Übersetzungsverhältnis zwischen Brennkraftmaschine und Generator beinhaltet. Dieser Faktor wird in einer Anordnung 42 als Quotient der Signale an den Ausgängen 30 und 40 berechnet und auf einen Ausgang 44 geführt. An einem weiteren Ausgang 46 wird ein mit dem nunmehr bekannten Faktor bewertetes, hochaufgelöstes Drehzahlsignal zur Anzeige oder Verwendung in weiterverarbeitenden Diagnoseeinrichtungen zur Verfügung gestellt.

Es versteht sich, daß die beschriebene Anordnung beispielhaften Charakter hat und durch Modifikationen den gewünschten Erfordernissen angepaßt werden kann. Zum Beispiel können die Signalauswertungen 28, 38 und 42 zu einer einzigen Stufe zusammengefaßt werden, wobei der Quotient 44 bereits als Verhältnis von Impulslängen anstelle von expliziten Drehzahlen berechnet werden kann.

Der Quotient 44 kann entweder einmalig zu Beginn einer Meßreihe oder fortlaufend neu ermittelt werden. Im letzten Fall kann der Verlauf des Quotienten über der Drehzahl eine Information über die mechanische Kopplung zwischen Brennkraftmaschine und Generator abgeben. Ein gegebenenfalls vorhandener drehzahlabhängiger Schlupf ist demnach exakt zu ermitteln.

Weiterhin kann die gesamte signalverarbeitende Anordnung 22 auf einem Digitalrechner realisiert werden, bei dem die einzelnen Blöcke durch Programmteile verwirklicht sind.

Die erfindungsgemäße Vorrichtung eignet sich vorteilhafterweise zur Erweiterung anderer Vorrichtungen zur Drehzahlermittlung. Sie ist beispielsweise Teil eines universellen Drehzahlmeßgerätes, das für fremdgezündete Brennkraftmaschinen geeignet ist. Ferner ist die erfindungsgemäße Vorrichtung besonders geeignet zur Bereitstellung eines Drehzahlsignals bei Laufunruhemessungen an fremdgezündeten Brennkraftmaschinen, wobei sowohl die Drehzahl als auch die Laufunruhe hochaufgelöst aus dem Signal U_{B} ableitbar sind durch einen einfachen Anschluß beispielsweies am Zigarettenanzünder eines Kraftfahrzeugs.

## Patentansprüche

1. Vorrichtung zur Drehzahlermittlung einer in einem Kraftfahrzeug angeordneten Brennkraftmaschine, die mit einer elektrischen Zündanlage gezündet wird, mit einer signalverarbeitenden Anordnung (22), die derart ausgebildet ist, daß sie im Betrieb die auf ein einen Drehstromgenerator enthaltendes Bordnetz (20) eingekoppelten, den Zündimpulsen entsprechenden Signalanteile (10, 12, 14, 16) erfaßt, dadurch gekennzeichnet, daß die signalverarbeitende Anordnung (22) eine Eingabeeinheit (29) umfaßt, über die die Anzahl der Zündimpulse pro Umdrehung der Brennkraftmaschine eingebbar ist, und daß die signalverarbeitende Einrichtung (22) weiterhin derart ausgebildet ist, daß sie im Betrieb die Generatorfrequenz der vom Drehstromgenerator auf dem Bordnetz (20) verursachten Restwelligkeit ermittelt, aus der ermittelten Generatorfrequenz, den den Zündimpulsen entsprechenden Signalanteilen (10, 12, 14, 16) und der eingegebenen Anzahl von Zündimpulsen pro Umdrehung der Brennkraftmaschine das Übersetzungsverhältnis zwischen der Generatorfrequenz und der Drehzahl der Brennkraftmaschine ermittelt, und aus der mit dem derart ermittelten Übersetzungsverhältnis bewerteten Generatorfrequenz ein hochaufgelöstes, die Drehzahl der Brennkraftmaschine repräsentierendes Signal berechnet.

2. Vorrichtung nach Anspruch 1, dadurch gekennzeichnet, daß die signalverarbeitende Anordnung (22) eine Signalfilterung (24, 34) enthält.

3. Vorrichtung nach Anspruch 1, dadurch gekennzeichnet, daß die signalverarbeitende Anordnung (22) einen Komparator enthält.

4. Vorrichtung nach Anspruch 1, dadurch gekennzeichnet, daß die signalverarbeitende Anordnung (22) eine festgestellte Änderung des Übersetzungsverhältnisses als Maß für einen Schlupf zwischen Brennkraftmaschine und Generator ermittelt.

## Claims

1. Apparatus to determine the rotational speed of an internal combustion engine which is arranged in a motor vehicle and which is ignited by means of an electrical ignition system, with a signal-processing arrangement (22) which is designed in such a way that, during operation, it records the signal fractions (10, 12, 14, 16) corresponding to the ignition pulses and coupled to a power supply (20) containing a three-phase generator, characterized in that the signal-processing arrangement (22) comprises an input unit (29), via which the number of ignition pulses per revolution of the internal combustion engine can be entered, and in that the signal-processing device (22) is, furthermore, designed in such a way that, during operation, it determines the generator frequency of the residual ripple caused on the power supply (20) by the three-phase generator, determines the transmission ratio between the generator frequency and the rotational speed of the internal combustion engine from the generator frequency determined, from the signal fractions (10, 12, 14, 16) corresponding to the ignition pulses and from the entered number of ignition pulses per revolution of the internal combustion engine, and from the generator frequency evaluated by means of the transmission ratio thus determined calculates a high-resolution signal representing the rotational speed of the internal combustion engine.

2. Apparatus according to Claim 1, characterized in that the signal-processing arrangement (22) contains a signal filtering (24, 34).

3. Apparatus according to Claim 1, characterized in that the signal-processing arrangement (22) contains a comparator.

4. Apparatus according to Claim 1, characterized in that the signal-processing arrangement (22) determines a detected change in the transmission ratio as a measure of a slip between the internal combustion engine and generator.

## Revendications

1. Dispositif pour déterminer la vitesse de rotation d'un moteur à combustion interne d'un véhicule automobile, dont l'allumage est assuré par une installation d'allumage électrique, et qui comprend un dispositif de traitement de signal (22) réalisé pour qu'en fonctionnement il détecte les parties de signal (10, 12, 14, 16) correspondant de l'installation d'allumage qui sont injectées dans le réseau embarqué (20) par l'alternateur, dispositif caractérisé en ce que le dispositif de traitement de signal (22) comprend une unité d'entrée (29) qui introduit le nombre d'impulsions d'allumage par rotation du moteur à combustion interne et en ce que le dispositif de traitement de signal (22) est en outre réalisé pour qu'en fonctionnement de l'alternateur, il détermine les ondulations résiduelles engendrées dans le réseau embarqué (20) par l'alternateur et à partir desquelles, partant de la fréquence de générateur déterminée à partir des composantes de signal correspondant aux impulsions d'allumage (10, 12, 14, 16) et du nombre approprié des impulsions d'allumage par rotation du moteur à combustion interne, on détermine le rapport de démultiplication entre la fréquence du générateur et la vitesse de rotation du moteur à combustion interne et, avec le rapport de démultiplication ainsi obtenu, on calcule un signal à forte résolution qui est représentatif de la vitesse de rotation du moteur à combustion interne.

2. Dispositif selon la revendication 1, caractérisé en ce que le dispositif de traitement de signal (22) contient un filtre de signal (24, 34).

3. Dispositif selon la revendication 1, caractérisé en ce que le dispositif de traitement de signal (22) comporte un comparateur.

4. Dispositif selon la revendication 1, caractérisé en ce que le dispositif de traitement de signal (22) utilise une variation fixe du rapport de démultiplication comme mesure d'un patinage entre le moteur et le générateur.
